# EUROPEAN PATENT APPLICATION

(11) **EP 4 794 212 A1**
(43) Date of publication of application: **19.08.2026**
(21) Application number: 26158513.7
(22) Date of filing: 13.02.2026
(51) Int. Cl.: H04B 7/024, H04B 7/06, H04W 24/10, H04W 52/24, H04W 56/00, H04W 72/121, H04W 72/27, H04W 72/541, H04W 74/00, H04W 74/06, H04W 84/12, H04W 92/20

(54) **METHOD AND APPARATUS FOR COORDINATED MULTI-ACCESS POINT TRANSMISSION IN WIRELESS COMMUNICATIONS**

(30) Priority: 17.02.2025 US 202563759371 P; 15.07.2025 US 202563844096 P; 12.02.2026 US 202619537541
(71) Applicant: MediaTek Inc., Hsinchu City 30078 (TW)
(72) Inventor: CHEN, You-Wei, San Jose (US); LIU, Jianhan, San Jose (US); LU, Kai Ying, San Jose (US); FANG, Pochun, Hsinchu City (TW); PARE, Jr., Thomas Edward, San Jose (US)
(74) Representative: Hoefer & Partner Patentanwälte mbB

(57) **Abstract**

Techniques pertaining to coordinated multi-access point transmission in wireless communications are described. A first access point, AP, may perform a frame exchange applicable to a coordinated transmission with a second AP (1610). The coordinated transmission may include at least one of a coordinated beamforming, CoBF, and a coordinated spatial reuse, CoSR. The first AP may transmit a physical layer protocol data unit, PPDU, based on the frame exchange (1620). The frame exchange may include an invite frame transmitted by the first AP for inviting the second AP to participate in the coordinated transmission, a response frame received by the first AP from the second AP for indicating a participation in the coordinated transmission in response to the invite frame, and a trigger frame transmitted by the first AP to the second AP prior to a transmission of the PPDU. The trigger frame may include confirmed information for performing the coordinated transmission.

## Description

### CROSS REFERENCE TO RELATED PATENT APPLICATION

The present disclosure is part of a non-provisional patent application claiming the priority benefit of U.S. Patent Application No. 63/759,371, filed 17 February 2025, and U.S. Patent Application No. 63/844,096, filed 15 July 2025, the content of which herein being incorporated by reference in their entirety.

### TECHNICAL FIELD

The present disclosure is generally related to wireless communications and, more particularly, to coordinated multi-access point transmission in wireless communications.

### BACKGROUND

Unless otherwise indicated herein, approaches described in this section are not prior art to the claims listed below and are not admitted as prior art by inclusion in this section.

In wireless communications in accordance with Institute of Electrical and Electronics Engineers (IEEE) standards, such as IEEE 802.11bn, coordinated transmission among multiple access points (APs) has been considered as an important mechanism to improve system performance. Such coordination may involve multiple transmission modes and requires signaling and control procedures prior to data transmission. In some coordination scenarios, different transmission modes may rely on different signaling mechanisms or procedures, which can increase system complexity and signaling overhead. In addition, maintaining consistent transmission behavior when participating stations dynamically become unavailable remains challenging. Accordingly, there is a need for techniques that support coordinated multi-access point transmission with reduced signaling complexity and improved robustness to dynamic station availability.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter. Methods and an apparatus according to the invention are defined in the appended independent claims. The appended dependent claims define preferred embodiments thereof. In particular, an apparatus according to the invention, which is implementable in an access point, comprises a transceiver configured to communicate wirelessly and a processor coupled to the transceiver and configured to perform operations comprising the method steps as defined in any one of the appended method claims.

In one aspect, a method may include performing, by a first AP, a frame exchange applicable to a coordinated transmission with a second AP, wherein the coordinated transmission comprises at least one of a coordinated beamforming (CoBF) transmission and a coordinated spatial reuse (CoSR) transmission. The method may also include transmitting, by the first AP, a physical layer protocol data unit (PPDU) based on the frame exchange, wherein the frame exchange comprises an invite frame transmitted by the first AP for inviting the second AP to participate in the coordinated transmission, a response frame received by the first AP from the second AP for indicating a participation in the coordinated transmission in response to the invite frame, and a trigger frame transmitted by the first AP to the second AP prior to a transmission of the PPDU, wherein the trigger frame comprises confirmed information for performing the coordinated transmission.

In another aspect, an apparatus implementable in a first AP may include a transceiver configured to communicate wirelessly and a processor coupled to the transceiver. The processor may perform, via the transceiver, a frame exchange applicable to a coordinated transmission with another AP, wherein the coordinated transmission comprises at least one of a coordinated beamforming (CoBF) transmission and a coordinated spatial reuse (CoSR) transmission. The processor may also transmit, via the transceiver, a PPDU based on the frame exchange, wherein the frame exchange comprises an invite frame transmitted by the apparatus for inviting the other AP to participate in the coordinated transmission, a response frame received by the apparatus from the other AP for indicating a participation in the coordinated transmission in response to the invite frame, and a trigger frame transmitted by the apparatus to the other AP prior to a transmission of the PPDU, wherein the trigger frame comprises confirmed information for performing the coordinated transmission.

In another aspect, a method may include performing, by a second AP, a frame exchange applicable to a coordinated transmission with a first AP, wherein the coordinated transmission comprises at least one of a coordinated beamforming (CoBF) transmission and a coordinated spatial reuse (CoSR) transmission. The method may also include transmitting, by the second AP, a physical layer protocol data unit (PPDU) based on the frame exchange, wherein the frame exchange comprises an invite frame received by the second AP from the first AP for inviting the second AP to participate in the coordinated transmission, a response frame transmitted by the second AP to the first AP for indicating a participation in the coordinated transmission in response to the invite frame, and a trigger frame received by the second AP from the first AP prior to a transmission of the PPDU, wherein the trigger frame comprises confirmed information for performing the coordinated transmission.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial loT (IloT) and narrowband loT (NB-loT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various proposed schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a diagram of an example scenario under a proposed scheme in accordance with the present disclosure.
FIG. 5 is a diagram of an example scenario under a proposed scheme in accordance with the present disclosure.
FIG. 6 is a diagram of an example scenario under a proposed scheme in accordance with the present disclosure.
FIG. 7 is a diagram of an example scenario under a proposed scheme in accordance with the present disclosure.
FIG. 8 is a diagram of an example scenario under a proposed scheme in accordance with the present disclosure.
FIG. 9 is a diagram of an example scenario under a proposed scheme in accordance with the present disclosure.
FIG. 10 is a diagram of an example scenario under a proposed scheme in accordance with the present disclosure.
FIG. 11 is a diagram of an example scenario under a proposed scheme in accordance with the present disclosure.
FIG. 12 is a diagram of an example scenario under a proposed scheme in accordance with the present disclosure.
FIG. 13 is a diagram of an example scenario under a proposed scheme in accordance with the present disclosure.
FIG. 14 is a diagram of an example scenario under a proposed scheme in accordance with the present disclosure.
FIG. 15 is a block diagram of an example communication system in accordance with an implementation of the present disclosure.
FIG. 16 is a flowchart of an example process in accordance with an implementation of the present disclosure.
FIG. 17 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes, and/or solutions pertaining to coordinated multi-access point transmission in wireless communications. According to the present disclosure, a common frame exchange framework applicable to both CoBF and CoSR may be performed by one or more APs to support coordinated transmission. Under various proposed implementations, such a common frame exchange framework may include multiple control frames to establish coordination prior to data transmission, and may be used to retain user consistency between control signaling and physical layer transmission. Although the techniques described herein may be presented individually for clarity, two or more of the techniques may be implemented separately or jointly to enable CoBF or CoSR transmission while accommodating situations in which one or more stations are unavailable, thereby improving coordination robustness and transmission efficiency.

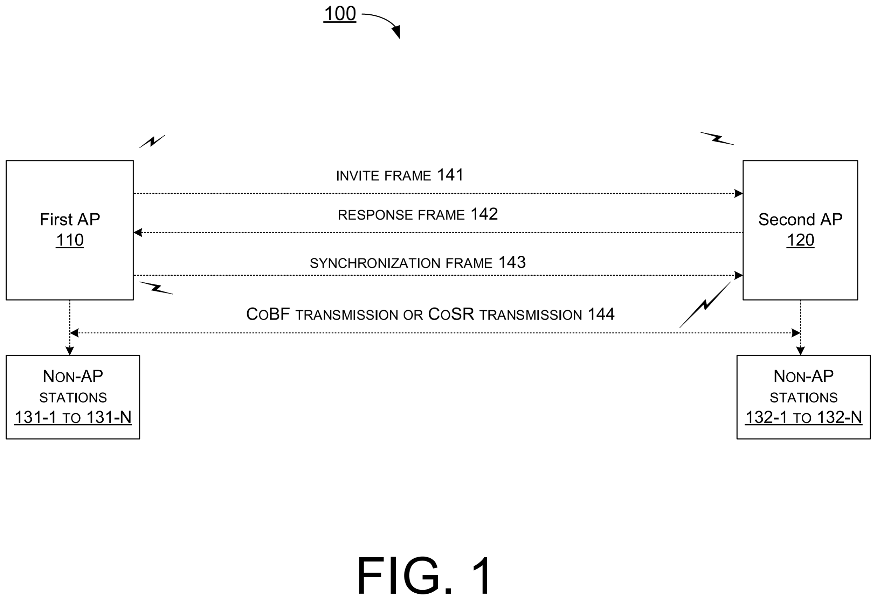

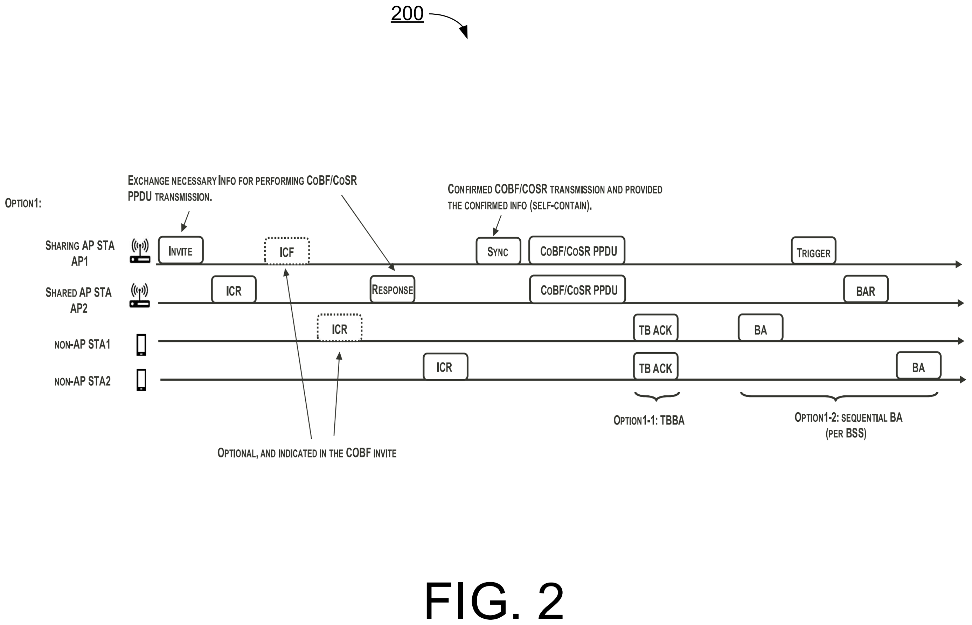

FIG. 1 illustrates an example network environment 100 in which various solutions and schemes in accordance with the present disclosure may be implemented. FIG. 2 to FIG. 17 illustrate examples of implementation of various proposed schemes in network environment 100 in accordance with the present disclosure. The following description of various proposed schemes is provided with reference to FIG. 1 to FIG. 17.

Referring to FIG. 1, network environment 100 may involve at least two AP devices, including a first AP 110 and a second AP 120 for coordinated multi-access point transmission. Preferably, the first AP 110 may operate as a coordinating access point, also referred to as a sharing AP device, and the second AP 120 may operate as a coordinated access point, also referred to as a shared AP device. The first AP 110 and the second AP 120 may be deployed in overlapping or adjacent basic service sets (BSSs) in accordance with one or more Institute of Electrical and Electronics Engineers (IEEE) 802.11 standards, such as IEEE 802.11bn, Wi-Fi 8, and future-developed standards, and may cooperate to perform coordinated transmission toward one or more non-access point stations (non-AP STAs). It is noteworthy that, while the various proposed schemes may be individually or separately described below, in actual implementations, each of the proposed schemes may be utilized individually or separately. Alternatively, some or all of the proposed schemes may be utilized jointly.

Referring to FIG. 1, preferably, a first AP 110 (such as the coordinating AP) may initiate a coordinated transmission procedure by performing a common frame exchange framework applicable to both CoBF and CoSR. The common frame exchange framework may include an invite frame 141 transmitted by the first AP 110 to the second AP 120 (such as the coordinated AP), wherein the invite frame 141 is used to request the second AP 120 to participate in the coordinated transmission procedure. Upon receiving the invite frame 141, the second AP 120 may transmit a response frame 142 to indicate a participation in the coordinated transmission procedure. The common frame exchange framework may further include a synchronization frame 143 (also referred to as a trigger frame) transmitted prior to a physical layer protocol data unit (PPDU), such that coordination-related information exchanged is applied to establish consistent transmission behavior for a subsequent CoBF PPDU or CoSR PPDU. Preferably, the invite frame 141 may include the coordinated transmission information, which may include a CoBF information or a CoSR information. Preferably, the invite frame 141 can also indicate whether there is an ICF/ICR between the sharing AP and one or more non-AP stations associated with the sharing AP.

After receiving the response frame 142, the first AP 110 may perform an intermediate coordination frame exchange applicable to both CoBF and CoSR to one or more non-AP stations 131-1 to 131-N. The second AP 120 may cooperate with the first AP 110 to perform the coordinated transmission, such as by jointly transmitting a CoBF transmission 144 or a CoSR transmission 144 to the one or more non-AP stations 132-1 to 132-N. Based on the common frame exchange framework, the first AP 110 may transmit a PPDU for coordinated transmission. Preferably, one or more non-AP stations may be indicated as targets in the synchronization frame 143 (trigger frame) and a preamble of the PPDU for coordinated transmission. In an event that a non-AP station among the non-AP stations is determined to be unavailable (e.g., not responsive to an ICF in intermediate coordination frame exchanges between the response frame and the synchronization frame (trigger frame)), the first AP 110 may retain the unavailable non-AP station as a target in synchronization signaling and/or physical layer preamble signaling of the PPDU while omitting a data portion of the PPDU corresponding to the unavailable non-AP station. The CoBF sharing AP and/or shared AP may refrain from transmitting the spatial streams corresponding to portion of the PPDU corresponding to the unavailable non-AP STA, wherein the portion includes Ultra-High Reliability Short Training Field (UHR-STF), Ultra-High Reliability Long Training Field (UHR-LTF), Data field and Padding, if presented. The non-transmitted portion may be achieved via nulled energy or zero energy on the spatial streams. The second AP 120 may cooperate with the first AP 110 to support the coordinated transmission, such as by participating in the common frame exchange framework and facilitating the CoBF transmission 144 or a CoSR transmission 144.

In an event that the non-AP STA is determined to be unavailable, the non-AP STA may determine that a data portion of a PPDU corresponding to the non-AP STA is omitted, while the non-AP STA remains as a target indicated in the synchronization frame (trigger frame) and a preamble of the PPDU. Accordingly, the non-AP STA may receive signaling associated with CoBF or CoSR without receiving the data portion of the PPDU corresponding to the non-AP STA.

Preferably, CoBF and CoSR may be implemented in accordance with IEEE 802.11bn standards. To trigger a physical layer protocol data unit (PPDU) transmission for CoBF or CoSR, a control frame, such as a trigger frame, or a multistation block acknowledgment (multi-STA BA), may be transmitted by a sharing AP to enable a shared AP to configure a downlink PPDU for coordinated transmission. Preferably, the trigger frame or the multi-STA BA may include one or more of: an indication of CoBF or CoSR transmission, trigger-based acknowledgment (TB ACK) related information, spatial stream configuration information, BSS color indication, and trigger frame structure information. In accordance with preferred embodiments of the present disclosure, a common frame exchange framework applicable to both CoBF and CoSR is proposed. Preferably, the common frame exchange may be implemented using Option 1 or Option 2. In Option 1, the common frame exchange is performed in a sequential manner. In Option 2, the common frame exchange is performed using a trigger-based (TB) mechanism. Preferably, in each of Option 1 and Option 2, an indicator specifying a CoBF/CoSR response location may be provided to indicate where CoBF/CoSR response information is carried within the frame exchange. Furthermore, based on the common frame exchange, preferred embodiments of the present disclosure propose carrying coordination-related information within a CoBF/CoSR invite frame and a response frame. For triggering CoBF/CoSR transmission, two alternative signaling approaches may be supported. In Option 1, required per-user information is carried in a user information field, and the user information field is designed in a way similar to the user information field in the IEEE 802.11be trigger frame structure. In Option 2, a special user information field is used to carry user information for the CoBF or CoSR PPDU, and the first AID in the special user information field is not a STA AID. These approaches may be implemented separately or in combination to support coordinated multi-access point transmission.

FIG. 2 illustrates an example scenario 200 of a coordinated multi-access point transmission procedure in accordance with the present disclosure. In this example, Option 1 is illustrated as a common frame exchange framework applicable to both CoBF and CoSR. Under Option 1, a sharing AP AP1 and a shared AP AP2 exchange a set of frames, including an invite frame, a response frame, and a synchronization (sync) frame, to support a unified transmission procedure for both CoBF and CoSR, thereby simplifying standard design. In preferred embodiments of Option 1, the invite frame and the response frame are exchanged between AP1 and AP2 to exchange information for performing CoBF or CoSR PPDU transmission, such as coordinated transmission participation and user related information. An intermediate coordination frame (ICF/ICR) may be optionally transmitted, for example, to check the availability of one or more non-AP STAs and to make one or more non-AP STAs ready to receive, wherein inclusion of the intermediate coordination frame (ICF/ICR) is optional and explicitly indicated in the invite frame. After completion of the invite and response exchange, AP1 transmits a sync frame (trigger frame), which serves as a common CoBF/CoSR sync (or trigger) under Option 1. The sync frame (trigger frame) may carry confirmed and self-contained information required for CoBF or CoSR PPDU transmission, such that subsequent PPDU transmissions can be executed in a synchronized and consistent manner across AP1 and AP2. Following the sync frame (trigger frame), one or more CoBF or CoSR PPDUs are transmitted by AP1 and AP2 to a plurality of non-AP STAs, such as non-AP STA1 and non-AP STA2. Preferably, if a non-AP STA associated with the AP1(or AP2) does not respond the ICR to the AP1(or AP2), the AP1(or AP2) determines that the non-AP STA is unavailable. Preferably, even when a non-AP STA is determined to be unavailable, the unavailable non-AP STA may still be retained as a target indicated in the sync frame (trigger frame) and/or a preamble of the PPDU, while a data portion of the PPDU corresponding to the unavailable non-AP STA is omitted. After one or more CoBF or CoSR PPDUs are transmitted by AP1 and AP2, the AP1 may receive a trigger-based acknowledgment via a trigger based PPDU. The trigger-based acknowledgment via the trigger based PPDU may be an ACK or a Block ACK. In FIG. 2, assuming that a non-AP STA 1 is associated with the AP1 and a non-AP STA 2 is associated with the AP2. With respect to acknowledgment signaling under Option 1, two alternatives are illustrated. Under Option 1-1, trigger-based acknowledgments are transmitted by multiple non-AP STAs in response to the CoBF or CoSR PPDU transmission. In detail, in Option 1-1, two TB ACKs are transmitted by the associated non-AP STAs in response to the coordinated CoBF/CoSR PPDU transmission. Each TB ACK corresponds to a respective non-AP STA participating in the coordinated transmission, thereby allowing the sharing AP and the shared AP to independently determine reception status. Under Option 1-2, acknowledgments are transmitted using sequential block acknowledgments (BA) on a per-BSS basis. Either Option 1-1 or Option 1-2 may be selected based on implementation choice. Accordingly, by adopting Option 1 with a common frame exchange framework and a common CoBF/CoSR sync frame (trigger frame), and by supporting acknowledgment signaling under Option 1-1 or Option 1-2, the proposed scheme enables efficient, flexible, and reliable coordinated multi-access point transmission for both CoBF and CoSR.

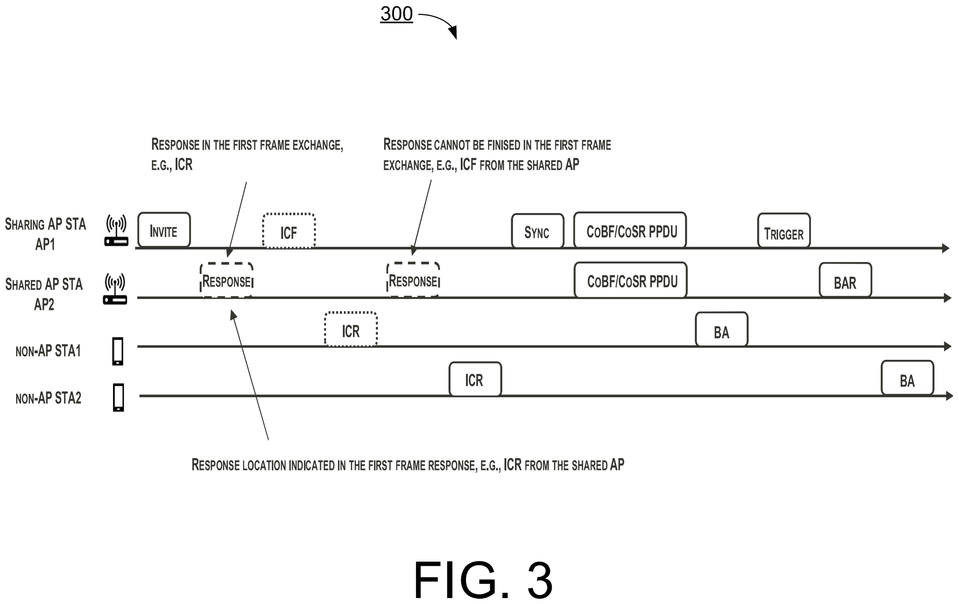

FIG. 3 illustrates an example scenario 300 under Option 1 of the proposed common frame exchange framework for CoBF and CoSR in accordance with the present disclosure. The example scenario 300 further elaborates on different locations for carrying CoBF response information in response to a CoBF invite frame. Preferably, there are technical benefits to carrying the CoBF response information in a frame transmitted immediately after the CoBF invite frame, such as in a first response frame. In such a case, a sharing AP may obtain the CoBF response information earlier and thus have more time to calculate a precoding matrix for a subsequent CoBF PPDU transmission. However, in some implementations, it may be difficult to fully feed back CoBF-related parameters, such as precoding information, within the first response frame transmitted immediately after the CoBF invite frame. To accommodate both considerations, preferred embodiments of the present disclosure propose a flexible mechanism under Option 1. Specifically, in example scenario 300, a response-location indicator is carried in a first response frame transmitted by the shared AP, such as a first ICR. The response-location indicator is configured to indicate a location of the CoBF response information. When the response-location indicator is set to a first value (e.g., set to 1), the CoBF response information is not carried in the first response frame, and a subsequent intermediate coordination frame (e.g., ICF) is transmitted to carry the CoBF response information. When the response-location indicator is set to a second value (e.g., set to 0), the CoBF response information is carried in the first response frame, such as the first ICR. Accordingly, by introducing the response-location indicator in the first response frame under Option 1, the proposed scheme provides implementation flexibility to support different processing capabilities of access points, while maintaining a unified common frame exchange framework for both CoBF and CoSR.

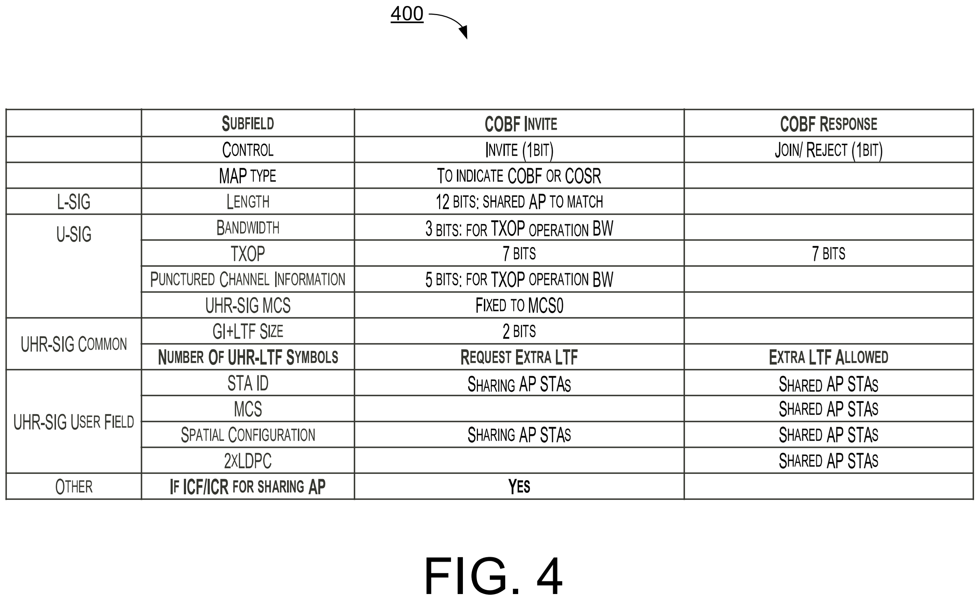

FIG. 4 illustrates information carried in a CoBF invite frame and a CoBF response frame under Option 1 in accordance with the present disclosure. As shown in FIG. 4, the CoBF invite frame and the CoBF response frame are configured to carry necessary information for calculating a precoder (e.g. calculating a precoding matrix) for a subsequent CoBF PPDU transmission. Preferably, the CoBF invite frame carries signaling information related to a coordinated transmission, including an indication of a CoBF operation or a CoSR operation, transmission opportunity (TXOP) related parameters, bandwidth information, and user-specific parameters. The CoBF response transmitted by a shared AP may carry corresponding response information to confirm participation in the coordinated transmission and to provide information required for precoder calculation. In addition, in example scenario 400, preferred embodiments of the present disclosure propose that the CoBF invite frame further carries a request for extra ultra-high reliability long training field (UHR-LTF) symbols. The request for extra UHR-LTF symbols enables improved channel estimation and reception performance for a subsequent CoBF PPDU transmission, particularly in scenarios involving coordinated transmission among multiple access points. Preferred embodiments of the present disclosure also propose that the CoBF invite frame carries an indication indicating whether an intermediate coordination frame (ICF/ICR) is to be transmitted. When the indication is set to a first value (e.g., set to 1), the sharing AP determines that an ICF is to be transmitted to make one or more associated non-AP stations ready to receive. When the ICF is to be transmitted, it is transmitted between the response frame 142 and the synchronization frame 143 (trigger frame). When the indication is set to a second value (e.g., set to 0), the sharing AP skips transmission of the ICF/ICR within its BSS, thereby reducing signaling overhead. Accordingly, under Option 1, the CoBF invite frame and the CoBF response frame jointly provide a self-contained signaling mechanism for coordinated transmission, enabling both efficient precoder computation and flexible coordination behavior while maintaining a common frame exchange framework applicable to both CoBF and CoSR.

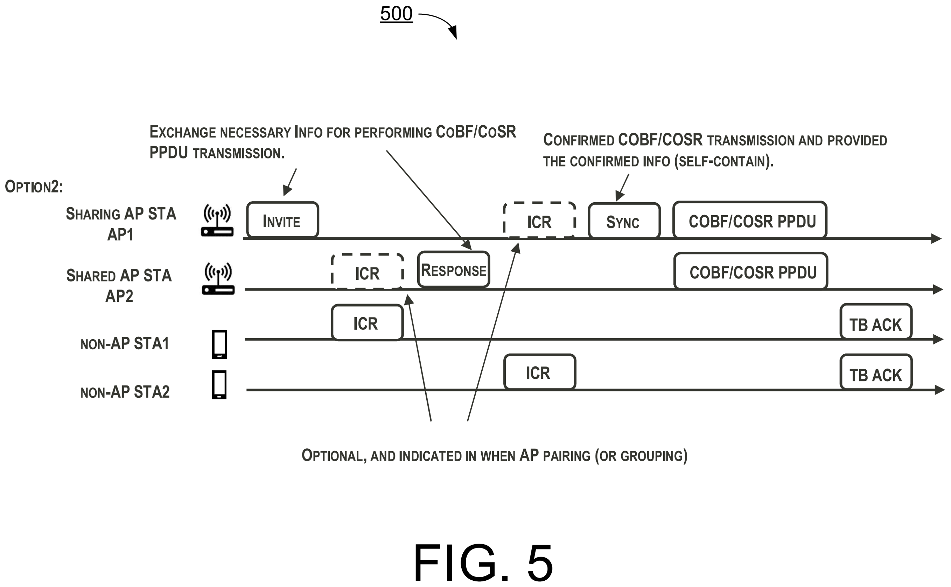

FIG. 5 illustrates an example scenario 500 under Option 2, which provides a common frame exchange framework for CoBF and CoSR transmission in accordance with the present disclosure. Compared with Option 1, Option 2 is designed to reduce frame exchange overhead and airtime consumption by leveraging a trigger-based physical layer protocol data unit (TB PPDU). In example scenario 500, a CoBF/CoSR invite frame transmitted by a sharing AP solicits responses from both a shared AP and one or more associated non-AP stations at substantially the same time. An ICR associated with the shared AP and an ICR associated with one or more associated non-AP stations may be transmitted via a TB PPDU, wherein the ICR associated with a shared AP may carry a CoBF/CoSR response frame. By transmitting the ICR associated with the shared AP and the ICR associated with one or more associated non-AP through the TB PPDU, multiple frame exchanges required in Option 1 may be eliminated, thereby reducing airtime consumption by approximately five frame exchanges in certain implementations. Also, since the CoBF invite frame transmitted by the sharing AP solicits responses from both the shared AP and one or more associated non-AP stations at substantially the same time, even when the shared AP rejects participation in the CoBF or CoSR transmission, the sharing AP may still obtain a TXOP and proceed with downlink transmission to its associated non-AP stations. Such a mechanism improves transmission robustness and avoids TXOP wastage in coordinated transmission scenarios. Option 2 may require that coordinated beamforming access points support TB PPDU transmission. During an access point negotiation or pairing procedure, the sharing AP and the shared AP may exchange capability information indicating whether TB PPDU transmission is supported. Based on the exchanged capability information, participation of an ICR from the shared AP may be optional, and the sharing AP and the shared AP may further negotiate to fallback to the Option 1 frame exchange framework when TB PPDU transmission is not supported. Accordingly, Option 2 provides a flexible and overhead-efficient common frame exchange framework for CoBF and CoSR transmission, while maintaining backward compatibility through capability negotiation and optional fallback to Option 1. In addition, in the example scenario 500 shown in FIG. 5, all ICRs transmitted by the shared AP, the sharing AP, and the associated non-AP STAs may be flexibly supported, either as individual coordination frames or as coordination information conveyed via a TB PPDU. Such ICRs may be optional and may be indicated during an AP pairing or grouping procedure. By allowing the ICRs from different participating entities to be aggregated, omitted, or conditionally transmitted, the proposed Option 2 provides a unified and efficient coordination mechanism that reduces signaling overhead while maintaining reliable and consistent CoBF/CoSR transmission behavior.

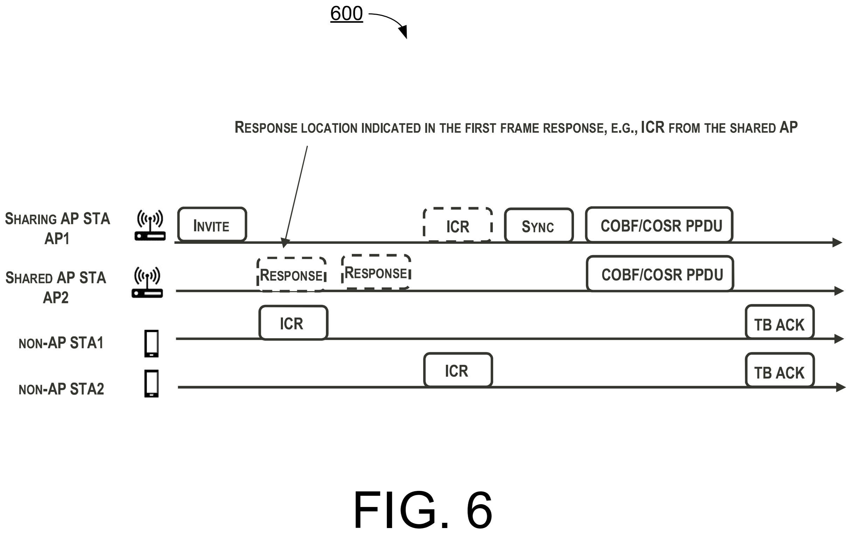

Referring to FIG. 6, an example scenario 600 illustrates a continuation of Option2 for a common frame exchange framework applicable to CoBF and CoSR in accordance with the present disclosure. Similar to Option1, Option2 also supports indicating a CoBF Response location through an indicator carried in a first response frame transmitted by a shared AP, for example, in a first ICR transmitted by the shared AP after receiving the invite frame. Preferably, the indicator carried in the first response frame (e.g., the first ICR after the invite frame) indicates whether CoBF response information is included in the first response frame or is deferred to a subsequent coordination frame (e.g., an ICF). When the indicator is set to a first value (e.g., set to 1), the CoBF response information is not carried in the first response frame (e.g., the first ICR after the invite frame) and an additional ICF is required to convey the CoBF response information. When the indicator is set to a second value (e.g., set to 0), the CoBF response information is carried directly in the first response frame (e.g., the first ICR). By supporting the CoBF Response location indication in Option2, the proposed scheme provides implementation flexibility while maintaining reduced signaling overhead enabled by a trigger-based transmission. Accordingly, coordinated transmission procedures under Option2 may adapt to different processing capabilities of participating access points while preserving a unified and common frame exchange framework for both CoBF and CoSR transmissions.

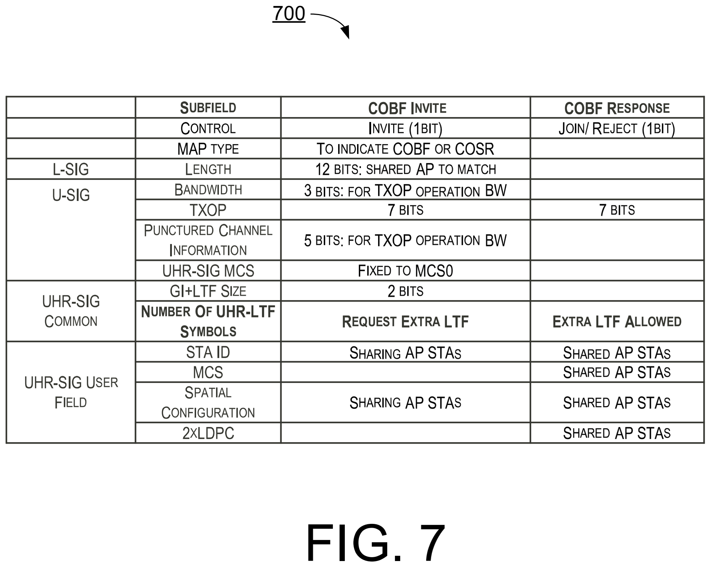

Referring to FIG. 7, an example scenario 700 illustrates information carried in a CoBF invite frame and a CoBF response frame under Option2 in accordance with the present disclosure. Similar to Option1, the CoBF invite frame and the CoBF response frame in Option2 are configured to carry information necessary for calculating a precoding matrix for a CoBF or CoSR transmission. Preferably, the information carried in the CoBF invite frame may include an invite subfield for inviting the shared AP to participate in the CoBF or CoSR transmission. The information carried in the CoBF invite frame may also include an indication for indicating the coordinated transmission type, such as CoBF or CoSR. The information carried in the CoBF invite frame may also include one or more information, such as bandwidth information, TXOP information, modulation and coding scheme (MCS) information, and station identifier (STA ID) information associated with one or more participating non-AP STAs, wherein one or more participating non-AP STAs are associated with the sharing AP and scheduled by the sharing AP to participate in the CoBF transmission. Preferably, the information carried in the CoBF response frame may include a subfield for indicating whether to participate in the CoBF transmission and station identifier (STA ID) information associated with one or more participating non-AP STAs, wherein one or more participating non-AP STAs are associated with the shared AP and scheduled by the shared AP to participate in the CoBF transmission. In addition, the CoBF invite frame may include an indication requesting extra UHR-LTF symbols, and the CoBF response frame may include a corresponding indication indicating whether the request for extra UHR-LTF symbols is allowed. By carrying such precoder-related information directly in the CoBF invite frame and the CoBF response frame under Option2, the proposed scheme enables the sharing AP and the shared AP to exchange essential transmission parameters without introducing additional frame exchanges, thereby supporting efficient precoder computation while maintaining the reduced signaling overhead enabled by trigger-based transmission.

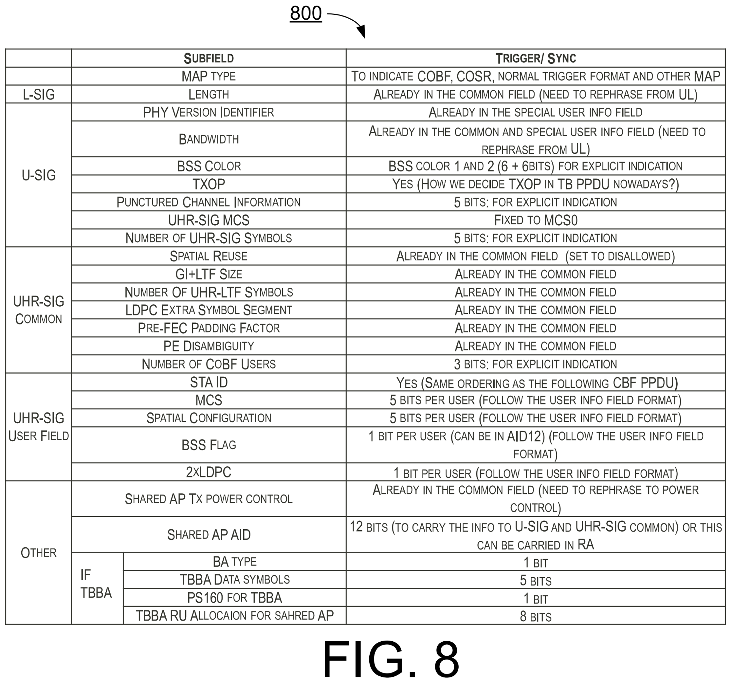

Referring to FIG. 8, an example scenario 800 illustrates information carried in a trigger frame or sync frame used to trigger a CoBF or CoSR PPDU transmission in accordance with the present disclosure. Preferably, the trigger frame is configured to provide confirmed and self-contained transmission information for the subsequent CoBF or CoSR PPDU. Preferably, the trigger frame may include one or more fields for indicating a coordinated transmission type, such as CoBF or CoSR, as well as bandwidth, TXOP, punctured channel information, and BSS color information. The trigger frame may further carry signaling related to UHR-SIG, including an MCS, a number of UHR-SIG symbols, and a number of UHR-LTF symbols. Some information (e.g., a number of UHR-SIG symbols and a number of UHR-LTF symbols) may be carried in a common signaling field to ensure that all participating APs (or all participating APs and non-AP STAs) can consistently interpret the transmission parameters. Preferably, the trigger frame may also include a plurality of user information fields that provide respective user information corresponding to multiple CoBF users. The user information may include, for each user, a STA ID, an MCS, spatial configuration information, a BSS flag, and a two-times low-density parity-check (2×LDPC) indication. The ordering of users in the trigger frame may correspond to the ordering used in the subsequent CoBF or CoSR PPDU, thereby enabling consistent user mapping across signaling and data transmission. Specifically, the order of users in the trigger frame is aligned with the order of users in the UHR-SIG User field in the CoBF or CoSR PPDU. In addition, when a TB acknowledgment mechanism is applied, the trigger frame may further include TB-related information, such as a BA type, a number of TBBA data symbols, a PS160 indication for TBBA, and resource unit (RU) allocation information for a shared AP. By aggregating such trigger and synchronization information into a single trigger frame, the proposed scheme enables efficient and reliable triggering of CoBF or CoSR PPDU transmission while reducing signaling overhead and ensuring coordinated transmission behavior among multiple APs and associated non-AP STAs.

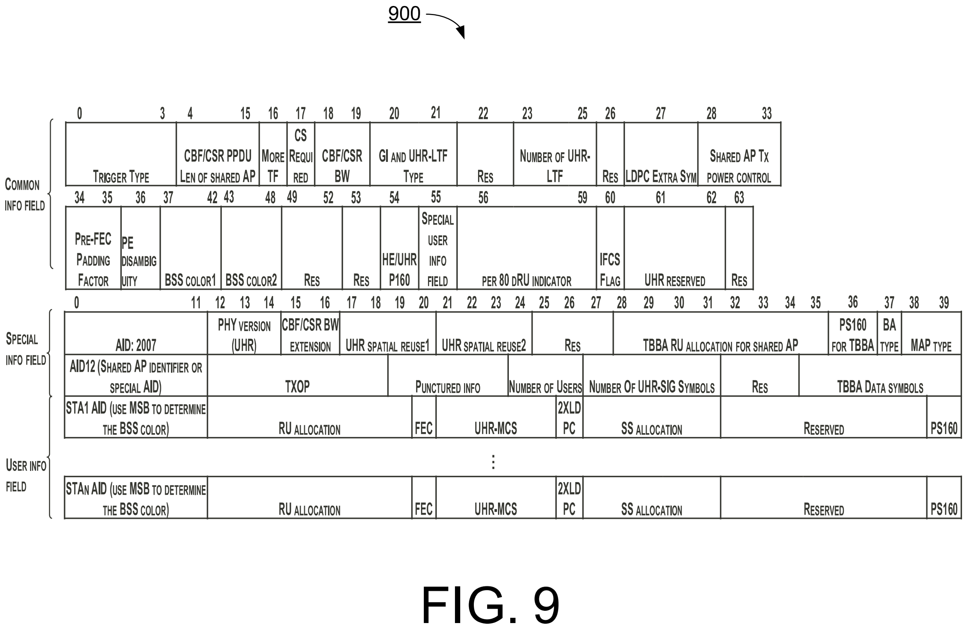

Referring to FIG. 9, an example scenario 900 illustrates Example 1, in which a buffer status report poll (BSRP) -based control frame is used as a trigger for CoBF or CoSR transmission in accordance with the present disclosure. In this example, the BSRP-based control frame is extended or modified to carry information required for triggering a CoBF or CoSR PPDU. Preferably, when the BSRP is used as a CoBF or CoSR trigger, required signaling information may be carried in one or more of a common information field, a special user information field, and a user information field corresponding to a shared AP. Such information may include, for example, an indication of CoBF or CoSR operation, bandwidth and TXOP related parameters, punctured channel information, spatial reuse configuration, UHR-SIG parameters, and shared AP transmit power control information. Compared to an existing trigger frame format, certain fields may be repurposed or extended, as illustrated in FIG. 9, to support coordinated multi-access point transmission. Preferably, the special user information field may carry information specific to a shared AP, such as a shared AP identifier, trigger-based (TB) acknowledgment configuration, RU allocation for the shared AP, and TB-related parameters. In addition, a plurality of user information fields is included. Each user information field may carry station information, including a station identifier, RU allocation, forward error correction (FEC) indication, MCS, spatial stream allocation, and 2×LDPC indication. In accordance with preferred embodiments of the present disclosure, a subsequent CoBF or CoSR PPDU triggered by the BSRP-based control frame may apply the same station ordering as indicated in the trigger frame. By maintaining consistent ordering between the trigger frame and the CoBF or CoSR PPDU, coordinated transmission behavior among multiple APs and associated non-AP stations can be ensured, thereby improving coordination efficiency and reducing signaling ambiguity.

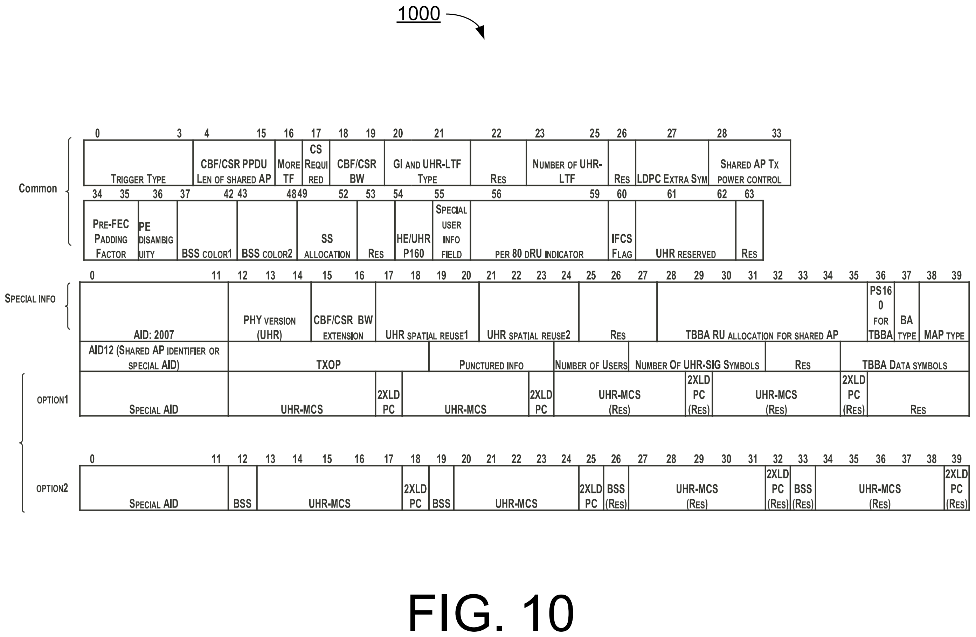

Referring to FIG. 10, an example scenario 1000 illustrates Example 2, which is a variation of the BSRP-based CoBF or CoSR control frame described with respect to FIG. 9. In this example, further signaling reduction may be achieved when an AP is capable of memorizing STAIDs of associated non-AP stations participating in coordinated transmission. Preferably, when the AP memorizes STAIDs, a user information field in the BSRP-based control frame may be further simplified. Instead of carrying a separate user information entry for each non-AP station, information of a plurality of non-AP stations may be aggregated and carried within a single user information field. For example, information corresponding to four non-AP stations, such as MCS, 2×LDPC indication, and BSS flag, may be jointly carried in one user information entry. Preferably, the sharing AP may explicitly indicate the STAIDs in order of a non-increasing sequence of the number of spatial streams assigned to each station in the spatial configuration. Preferably, the user information field carrying information of one or more non-AP stations may be associated with a special AID rather than a conventional per-station AID. The special AID may be known to the AP in advance, thereby allowing the shared AP to correctly interpret the user information, wherein the special AID is located at the start of the User Information field. In accordance with preferred embodiments of the present disclosure, two example formats of the user information field are illustrated in FIG. 10. By using a special AID and user information, signaling overhead in the BSRP-based control frame may be further reduced while maintaining information consistency between the control frame and a subsequent CoBF or CoSR PPDU. As a result, coordinated multi-access point transmission efficiency may be improved without compromising station configuration flexibility.

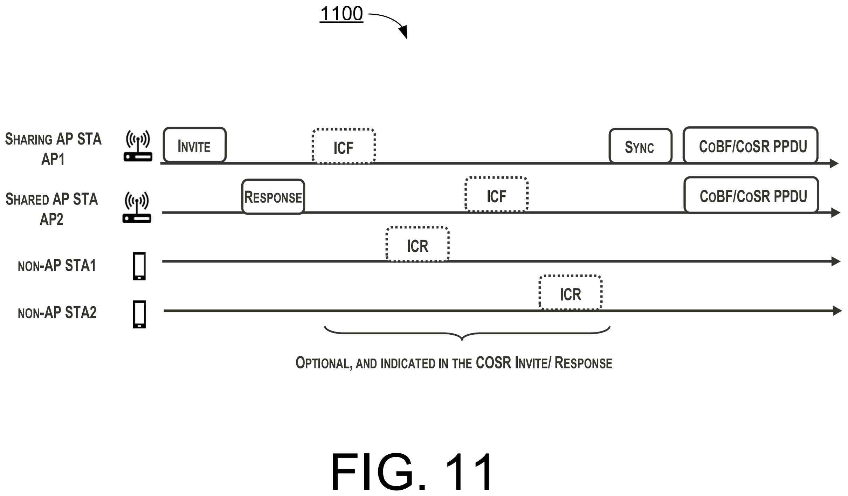

Referring to FIG. 11, an example scenario 1100 illustrates a frame exchange procedure for CoBF, in which ICF and/or ICR are transmitted in the middle of a common frame exchange. Preferably, the ICF/ICR frames are used to check the availability of non-AP STAs associated with a sharing AP and to make the non-AP STAs ready to receive prior to a CoBF or CoSR PPDU transmission. The non-AP STAs may be enhanced multi-link single-radio (EMLSR) stations or dynamic unavailability operation (DUO) stations. Preferably, after a CoBF or CoSR invite frame and a response frame are exchanged between a sharing AP and a shared AP, one or more ICF or ICR frames may be optionally transmitted, as indicated in the invite frame and/or the response frame. The ICF frame may solicit responses from associated non-AP STAs to determine whether the non-AP STAs are available for the subsequent coordinated transmission. When a non-AP STA associated with the sharing AP does not respond to the ICF, multiple handling options may be supported. Under Option 1, the sharing AP retains the unavailable non-AP STA in a sync frame (trigger frame) and in a preamble of a CoBF or CoSR PPDU, while omitting a data portion of the CoBF or CoSR PPDU corresponding to the unavailable non-AP STA. Under Option 2, the sharing AP removes the unavailable non-AP STA from the sync frame (trigger frame), such that the unavailable non-AP STA is not indicated as a target of the subsequent CoBF or CoSR PPDU. Under Option 3, the sharing AP applies an additional indication to explicitly mark the non-AP STA as unavailable. In preferred embodiments, Option 3 provides an additional technical benefit in that, when sufficient processing time is available (for example, by inserting padding or delaying transmission), a shared AP may re-calculate a precoding matrix based on an updated set of available non-AP STAs. As a result, coordinated transmission performance and robustness may be improved while maintaining flexibility in handling dynamic station availability during the common frame exchange.

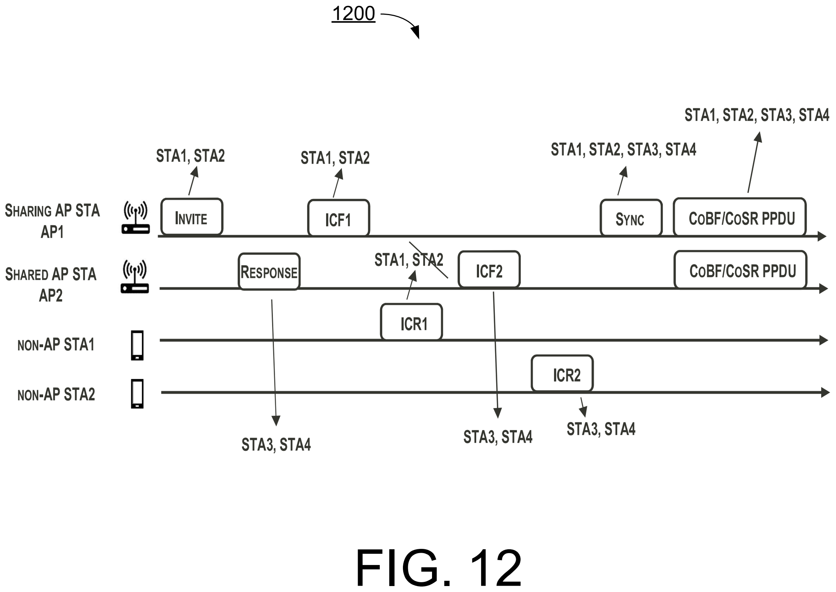

Referring to FIG. 12, an example scenario 1200 illustrates an embodiment corresponding to Option 1, in which an unavailable non-AP STA is retained in a sync frame (trigger frame) and in a preamble of a CoBF or CoSR PPDU. In this example, a sharing AP and a shared AP exchange STA lists through a CoBF invite frame and a response frame, respectively. Preferably, each of the CoBF invite frame and the response frame carries information of only the STAs associated with the transmitting AP. As shown in FIG. 12, the sharing AP initially indicates a first set of associated STAs (e.g., STA1 and STA2) in the invite frame, while the shared AP indicates a second set of associated STAs (e.g., STA3 and STA4) in the response frame. The first set of associated STAs (e.g., STA1 and STA2) associates with the sharing AP, and the second set of associated STAs (e.g., STA3 and STA4) associates with the shared AP. Subsequently, one or more intermediate coordination frames (e.g., ICF1 and ICF2) and corresponding responses (e.g., ICR1 and ICR2) are exchanged to check the availability of the associated STAs. Preferably, when a non-AP STA (for example, STA2) does not respond to an intermediate coordination frame such as ICF1, the sharing AP may infer that a channel condition associated with the non-AP STA is unfavorable, for example, due to channel busy status or overlapping basic service set (OBSS) interference. In such a case, multiple implementation choices may be supported. For instance, the sharing AP may decide to continue transmitting data to the non-AP STA despite the lack of response, or alternatively, may retain the non-AP STA in the sync frame and in the PPDU preamble while omitting a data portion corresponding to the unavailable non-AP STA. In a case, the non-AP STA remains listed as a transmission target for synchronization and signaling purposes (for example, included in the PPDU preamble), while no data is transmitted to the unavailable non-AP STA. In this case, non-AP STA scheduling remains the same as the invite frame and the response frame, and thus sharing and shared AP can start CoBF precoder processing early because there are no dynamic changes of number of STAs and spatial stream configurations from the sync frame. The same STA list carried in the Sync frame (trigger frame) needs to be the same in the PPDU, which is used to align the preamble contents among APs (the sharing AP and the shared AP). For the unavailable non-AP STA, the AP associated with the unavailable non-AP STA can allocate nulled energy or zero energy on the spatial streams to the non-AP STA to further reduce the interference to the participating STA. For example, the AP associated with the unavailable non-AP STA allocates nulled energy or zero energy on the spatial streams corresponding to the portion of the PPDU corresponding to the unavailable non-AP STA, wherein the portion includes UHR-STF, UHR-LTF, Data field, and Padding, if present.

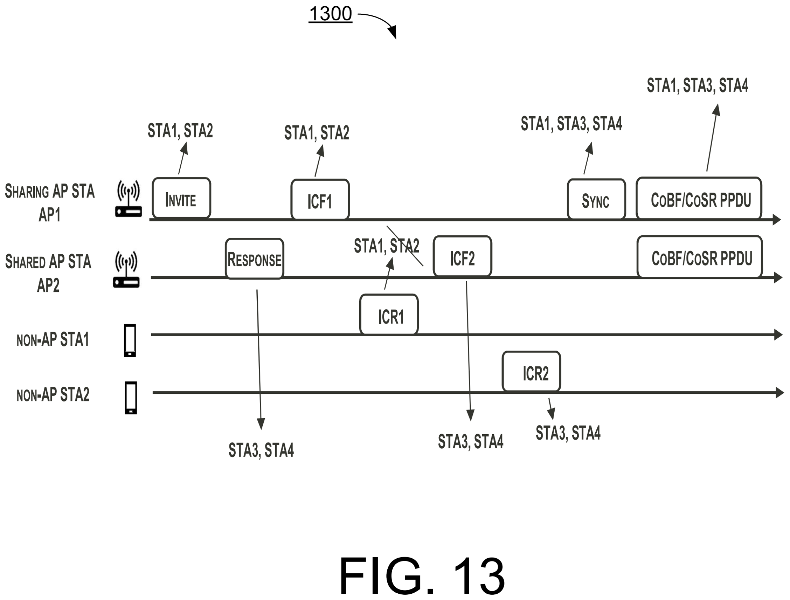

Referring to FIG. 13, an example scenario 1300 illustrates an embodiment corresponding to Option 2, in which an unavailable non-AP STA is removed from a sync frame and from a preamble of a CoBF or CoSR PPDU. Similar to the example scenario shown in FIG. 12, a sharing AP and a shared AP exchange lists of their associated STAs through a CoBF invite frame and a response frame, respectively, and intermediate coordination frames (e.g., ICF1 and ICF2) are transmitted to check the availability of the associated non-AP STAs. The ICF1 is transmitted by the sharing AP to one or more non-AP STAs (for example, STA1 and STA2). An ICR1 is transmitted by the STA1 to respond to the ICF1. The ICF2 is transmitted by the shared AP to one or more non-AP STAs (for example, STA3 and STA4). An ICR2 is transmitted by the STA3 and the STA4 to respond to the ICF2. As shown in FIG. 13, when a non-AP STA (for example, STA2) does not respond to an intermediate coordination frame such as ICF1, the sharing AP may determine that the non-AP STA is unavailable for the upcoming coordinated transmission. In accordance with Option 2, the sharing AP may remove the unavailable non-AP STA from subsequent coordinated signaling, including removing the non-AP STA from the Sync frame and from the preamble of the CoBF or CoSR PPDU. In this embodiment, only the remaining available non-AP STAs (for example, STA1, STA3, and STA4) are indicated as transmission targets in the sync frame and the PPDU preamble, and corresponding per-user information is carried only for those available non-AP STAs. By excluding the unavailable non-AP STA from the Sync frame and the PPDU preamble, signaling overhead in the UHR-SIG User field may be reduced, thereby saving airtime and improving transmission efficiency. Accordingly, Option 2 enables the sharing AP and the shared AP to adapt the coordinated transmission procedure by dynamically updating the set of target non-AP STAs based on availability feedback, while maintaining consistency between the common frame exchange and the resulting CoBF or CoSR PPDU transmission.

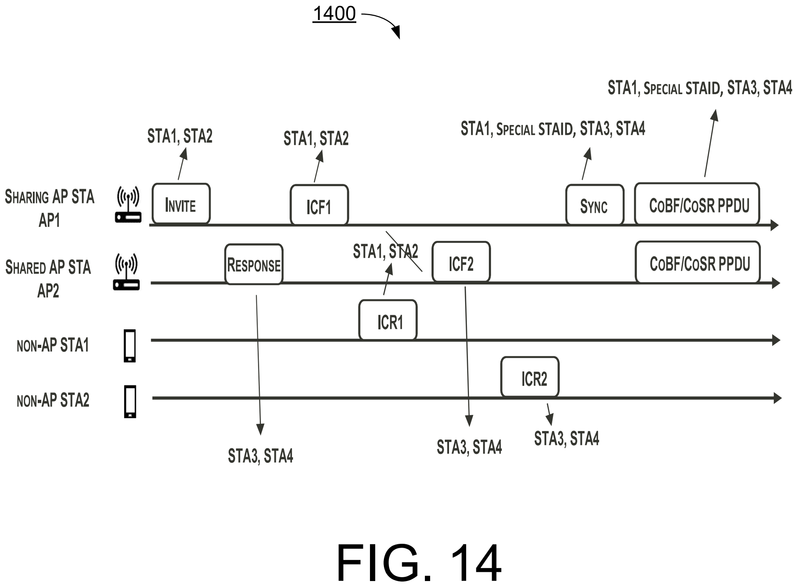

Referring to FIG. 14, an example scenario 1400 illustrates an embodiment corresponding to Option 3, in which an additional indication is provided for an unavailable non-AP STA during a coordinated multi-access point transmission procedure. Similar to the example scenarios shown in FIG. 12 and FIG. 13, a sharing AP and a shared AP exchange information of their associated non-AP STAs through a CoBF invite frame and a response frame, and intermediate coordination frames (e.g., ICF1 and ICF2) are transmitted to check the availability of the associated non-AP STAs. As shown in FIG. 14, when a non-AP STA (for example, STA2) does not respond to an intermediate coordination frame such as ICF1, the sharing AP may determine that the non-AP STA is unavailable. In accordance with Option 3, instead of silently removing the unavailable non-AP STA from the Sync frame and the preamble of the CoBF or CoSR PPDU, the sharing AP may provide an explicit indication of the unavailable non-AP STA to the shared AP. Preferably, such explicit indication may be implemented by replacing an identifier of the unavailable non-AP STA with a special STAID in the Sync frame and/or in the preamble of the CoBF or CoSR PPDU. By using the special STAID, the sharing AP informs the shared AP that a corresponding non-AP STA is unavailable, while still preserving the overall user ordering and frame structure consistency. Based on the explicit indication carried by the special STAID, the shared AP may determine that the corresponding non-AP STA is unavailable and may decide whether to reuse a previously calculated precoding matrix or to re-calculate the precoding matrix, for example, when sufficient processing time is available or when additional padding is applied. Accordingly, Option 3 provides enhanced coordination flexibility and enables the shared AP to make informed decisions regarding precoder computation, thereby improving robustness and implementation feasibility of coordinated beamforming or coordinated spatial reuse.

### Illustrative Implementations

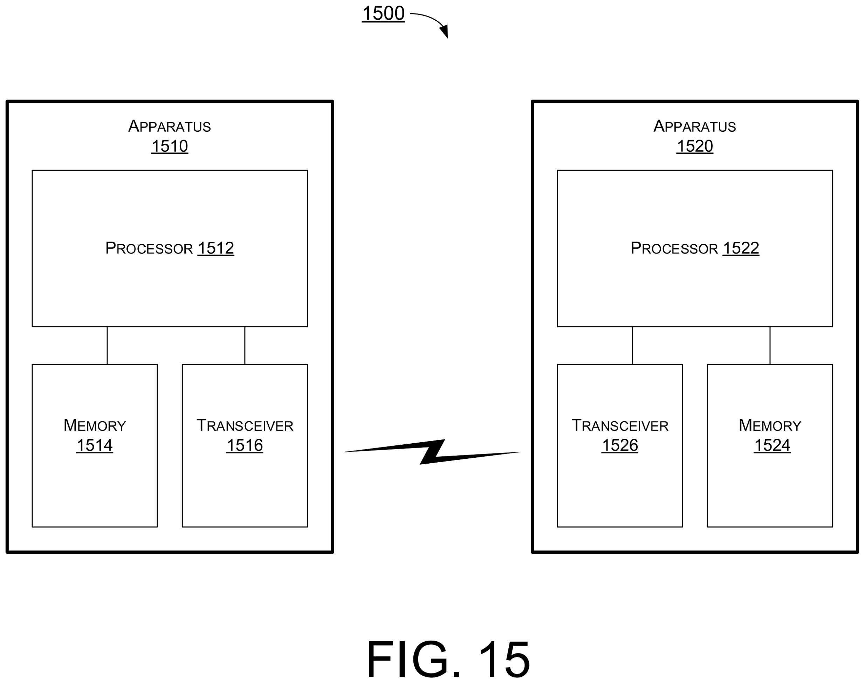

FIG. 15 illustrates an example system 1500 having at least an example apparatus 1510 and an example apparatus 1520 in accordance with an implementation of the present disclosure. Each of apparatus 1510 and apparatus 1520 may perform various functions to implement schemes, techniques, processes, and methods described herein pertaining to coordinated multi-access point (MAP) transmission, including CoBF transmission and CoSR transmission, as described above with respect to various proposed designs, concepts, schemes, systems, and methods. For instance, apparatus 1510 may be implemented in a sharing AP and apparatus 1520 may be implemented in a shared AP, or vice versa.

When implemented as an AP, apparatus 1510 or apparatus 1520 may be implemented in a wireless router, a WLAN access point, or a network controller. When implemented as a STA, apparatus 1520 may be implemented in a smartphone, a smart watch, a personal digital assistant, a digital camera, or a computing equipment such as a tablet computer, a laptop computer or a notebook computer. Each of apparatus 1510 and apparatus 1520 may also be a part of a machine type apparatus, which may be an loT apparatus such as an immobile or a stationary apparatus, a home apparatus, a wire communication apparatus or a computing apparatus. For instance, each of apparatus 1510 and apparatus 1520 may be implemented in a smart thermostat, a smart fridge, a smart door lock, a wireless speaker or a home control center. When implemented in or as a network apparatus, apparatus 1510 and/or apparatus 1520 may be implemented in a network node, such as an AP in a WLAN.

In some implementations, each of apparatus 1510 and apparatus 1520 may be implemented in the form of one or more integrated-circuit (IC) chips, such as, for example and without limitation, one or more single-core processors, one or more multicore processors, one or more reduced-instruction set computing (RISC) processors, or one or more complex-instruction-set-computing (CISC) processors. In the various schemes described herein, apparatus 1510 and apparatus 1520 may be implemented as AP devices participating in coordinated multi-AP transmission. Each of apparatus 1510 and apparatus 1520 may include at least some of those components shown in FIG. 15 such as a processor 1512 and a processor 1522, respectively, for example. Each of apparatus 1510 and apparatus 1520 may further include one or more other components not pertinent to the proposed scheme of the present disclosure (e.g., internal power supply, display device and/or user interface device), and, thus, such component(s) of apparatus 1510 and apparatus 1520 are neither shown in FIG. 15 nor described below in the interest of simplicity and brevity.

In one aspect, each of processor 1512 and processor 1522 may be implemented in the form of one or more single-core processors, one or more multicore processors, one or more RISC processors or one or more CISC processors. That is, even though a singular term "a processor" is used herein to refer to processor 1512 and processor 1522, each of processor 1512 and processor 1522 may include multiple processors in some implementations and a single processor in other implementations in accordance with the present disclosure. In another aspect, each of processor 1512 and processor 1522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 1512 and processor 1522 is a special-purpose machine specifically designed, arranged and configured to perform specific tasks including those pertaining to coordinated multi-access point transmission, such as CoBF and CoSR, transmission in wireless communications in accordance with various implementations of the present disclosure.

In some implementations, apparatus 1510 may also include a transceiver 1516 coupled to processor 1512. Transceiver 1516 may include a transmitter capable of wirelessly transmitting and a receiver capable of wirelessly receiving data. In some implementations, apparatus 1520 may also include a transceiver 1526 coupled to processor 1522. Transceiver 1526 may include a transmitter capable of wirelessly transmitting and a receiver capable of wirelessly receiving data. It is noteworthy that, although transceiver 1516 and transceiver 1526 are illustrated as being external to and separate from processor 1512 and processor 1522, respectively, in some implementations, transceiver 1516 may be an integral part of processor 1512 as a system on chip (SoC) and/or transceiver 1826 may be an integral part of processor 1522 as a SoC.

In some implementations, apparatus 1510 may further include a memory 1514 coupled to processor 1512 and capable of being accessed by processor 1512 and storing data therein. In some implementations, apparatus 1520 may further include a memory 1524 coupled to processor 1522 and capable of being accessed by processor 1522 and storing data therein. Each of memory 1514 and memory 1524 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 1514 and memory 1524 may include a type of read-only memory (ROM) such as mask ROM, programmable ROM (PROM), erasable programmable ROM (EPROM) and/or electrically erasable programmable ROM (EEPROM). Alternatively, or additionally, each of memory 1514 and memory 1524 may include a type of non-volatile random-access memory (NVRAM) such as flash memory, solid-state memory, ferroelectric RAM (FeRAM), magnetoresistive RAM (MRAM) and/or phase-change memory.

Each of apparatus 1510 and apparatus 1520 may be a communication entity capable of communicating with each other using various proposed schemes in accordance with the present disclosure. For illustrative purposes and without limitation, a description of capabilities of apparatus 1510, as first AP 110, and apparatus 1520, as second AP 120, is provided below. It is noteworthy that, although a detailed description of capabilities, functionalities and/or technical features of apparatus 1520 is provided below, the same may be applied to apparatus 1510 although a detailed description thereof is not provided solely in the interest of brevity. It is also noteworthy that, although the example implementations described below are provided in the context of WLAN, the same may be implemented in other types of networks.

Under various proposed schemes pertaining to coordinated multi-access point transmission, including CoBF transmission and CoSR transmission, in wireless communications in accordance with the present disclosure, with apparatus 1510 implemented in or as a first AP 110, and apparatus 1520 implemented in or as second AP 120 in network environment 100 in accordance with one or more of IEEE 802.11 standards, processor 1512 of apparatus 1510 may perform, via the transceiver 1516, a frame exchange applicable to a coordinated transmission with the apparatus 1520, wherein the coordinated transmission is at least one of a CoBF transmission and a CoSR transmission. Moreover, processor 1512 may transmit, via the transceiver 1516, a PPDU based on the frame exchange. Preferably, wherein the frame exchange comprises an invite frame transmitted by the first AP for inviting the second AP to participate in the coordinated transmission, a response frame received by the first AP from the second AP transmitted by the second AP for indicating a participation in the coordinated transmission in response to the invite frame, and a trigger frame transmitted by the first AP to the second AP prior to a transmission of the PPDU, wherein the trigger frame comprises confirmed information for performing the coordinated transmission.

In some implementations, the processor 1512 may cause the invite frame to carry an indication indicating whether an initial control frame is to be transmitted by the first AP for making one or more non-AP STAs associated with the first AP ready to receive. When the initial control frame is to be transmitted by the first AP, it is transmitted between the response frame and the trigger frame.

In some implementations, the trigger frame comprises a user information field configured to carry a user information for the PPDU, and a first AID field in the user information field is not an AID field addressed to an associated non-AP STA in the coordinated transmission. In some implementations, the first AID field is at the start of the User Information field. In some implementations, the user information field is configured to carry information of one or more of non-AP STAs within one user information entry, and the information of the one or more of non-AP STAs comprises at least one of a modulation and coding scheme (MCS), a two-times low-density parity-check (2×LDPC) indication, and a basic service set (BSS) flag for each of the one or more non-AP STAs.

In some implementations, all non-AP STAs that are scheduled to participate in the coordinated transmission listed in the invite frame and the response frame are presented in the trigger frame and a preamble of the PPDU in the coordinated transmission. In some implementations, in an event that a non-access point station (non-AP STA) that is scheduled by the first AP to participate in the coordinated transmission is unavailable, the non-AP STA is retained in the trigger frame and a preamble of the PPDU while a data portion of the PPDU corresponding to the non-AP STA is omitted. In some implementations, the invite frame is transmitted to solicit the second AP and one or more non-AP STAs associated with the first AP to transmit a trigger-based PPDU, wherein the response frame from the second AP and an ICR from the one or more non-AP STAs are carried in the trigger-based PPDU. In some implementations, a first response transmitted by the second AP in response to the invite frame carries an indicator indicating a location of the response frame carrying CoBF response information.

In some implementations, the indicator indicates whether the response frame carrying CoBF response information is carried in the first response or is carried in a subsequent intermediate coordination frame transmitted by the second AP. In some implementations, the non-AP STA is determined to be unavailable in an event that the non-AP STA does not respond to the initial control frame from its associated AP, wherein the initial control frame is used for making the non-AP STA ready to receive. In some implementations, processor 1512 may receive, by transceiver 1516, a trigger-based acknowledgment transmitted by one or more STAs associated with the first AP. In some implementations, an order of users in the trigger frame is aligned with an order of users in a UHR-SIG User field in the PPDU for the coordinated transmission.

### Illustrative Processes

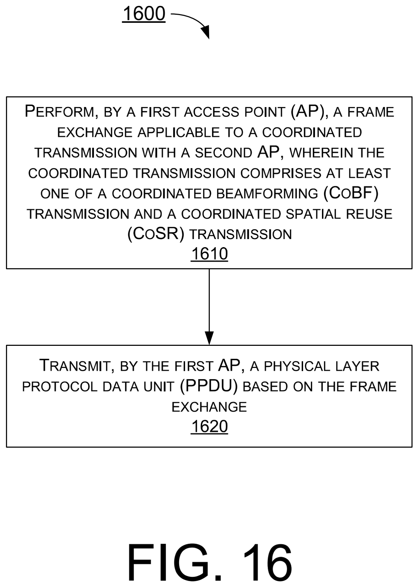

FIG. 16 illustrates an example process 1600 in accordance with an implementation of the present disclosure. Process 1600 may represent an aspect of implementing various proposed designs, concepts, schemes, systems and methods described above. More specifically, process 1600 may represent an aspect of the proposed concepts and schemes pertaining to coordinated multi-access point transmission in wireless communications in accordance with the present disclosure. Process 1600 may include one or more operations, actions, or functions as illustrated by one or more of blocks 1610 and 1620. Although illustrated as discrete blocks, various blocks of process 1600 may be divided into additional blocks, combined into fewer blocks, or eliminated, depending on the desired implementation. Moreover, the blocks/sub-blocks of process 1600 may be executed in the order shown in FIG. 16 or, alternatively in a different order. Furthermore, one or more of the blocks/sub-blocks of process 1600 may be executed repeatedly or iteratively. Process 1600 may be implemented by apparatus 1510 or apparatus 1520, as well as any variations thereof. Solely for illustrative purposes and without limiting the scope, process 1600 is described below in the context of apparatus 1610 implemented in or as a first AP 110 and apparatus 1520 implemented in or as a second AP 120 in network environment 100 in accordance with one or more of the IEEE 802.11 standards. Process 1600 may begin at block 1610.

At 1610, process 1600 may involve processor 1512 performing, via transceiver 1516, a frame exchange applicable to a coordinated transmission with the second AP, wherein the coordinated transmission comprises at least one of a coordinated beamforming (CoBF) transmission and a coordinated spatial reuse (CoSR) transmission. Process 1900 may proceed from 1910 to 1920.

At 1620, process 1600 may involve processor 1512 transmitting, via the transceiver 1516, a physical layer protocol data unit (PPDU) based on the frame exchange, wherein the frame exchange comprises an invite frame transmitted by the first AP for inviting the second AP to participate in the CoBF transmission or the CoSR transmission, a response frame received by the first AP from the second AP for indicating a participation in the CoBF transmission or the CoSR transmission in response to the invite frame, and a trigger frame transmitted by the first AP to the second AP prior to a transmission of the PPDU, wherein the trigger frame comprises confirmed information for performing the CoBF transmission or the CoSR transmission.

In some implementations, the invite frame exchanged in process 1600 may carry an indication indicating whether an initial control frame is to be transmitted by the first AP for making one or more non-AP STAs associated with the first AP ready to receive. In some implementations, when the initial control frame is to be transmitted, it may be transmitted between the response frame and the trigger frame.

In some implementations, the trigger frame comprises a user information field configured to carry a user information for the PPDU, and the first AID field in the user information field is not an AID field addressed to an associated non-AP STA in the coordinated transmission. In some implementations, the first AID field is at the start of the User Information field. In some implementations, the user information field is configured to carry information of one or more of non-AP STAs within one user information entry, and the information of the one or more non-AP STAs comprises at least one of a modulation and coding scheme (MCS), a two-times low-density parity-check (2×LDPC) indication, and a basic service set (BSS) flag for each of the one or more non-AP STAs.

In some implementations, all non-AP STAs that are scheduled to participate in the coordinated transmission listed in the invite frame and the response frame are presented in the trigger frame and a preamble of the PPDU in the coordinated transmission. In some implementations, in an event that a non-AP STA that is scheduled by the first AP to participate in the coordinated transmission is unavailable, the non-AP STA is retained in the trigger frame and the preamble of the PPDU while a data portion of the PPDU corresponding to the non-AP STA is omitted. In some implementations, the invite frame is transmitted to solicit the second AP and one or more non-AP STAs associated with the first AP to transmit a trigger-based PPDU, wherein the response frame from the second AP and an ICR from the one or more non-AP STAs are carried in the trigger-based PPDU. In some implementations, a first response transmitted by the second AP in response to the invite frame carries an indicator indicating a location of the response frame carrying CoBF response information. In some implementations, the indicator indicates whether the response frame carrying CoBF response information is carried in the first response or is carried in a subsequent intermediate coordination frame transmitted by the second AP. In some implementations, the non-AP STA is determined to be unavailable in an event that the non-AP STA does not respond to the initial control frame from its associated AP, wherein the initial control frame is used for making the non-AP STA ready to receive.

In some implementations, process 1600 may involve processor 1512 transmitting, via the transceiver 1516, receiving a trigger-based acknowledgment transmitted by one or more STAs associated with the first AP. In some implementations, an order of users in the trigger frame is aligned with an order of users in a UHR-SIG User field in the PPDU for the coordinated transmission.

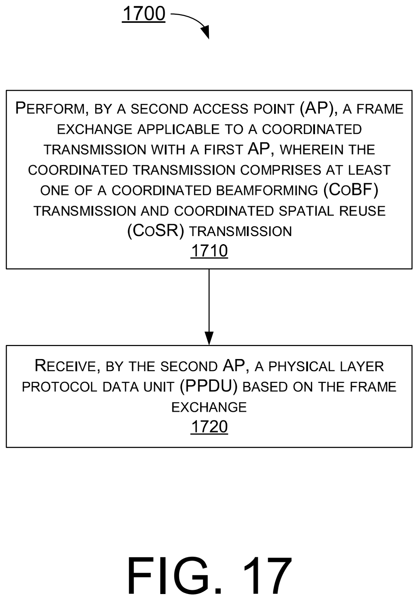

FIG. 17 illustrates an example process 1700 in accordance with an implementation of the present disclosure. Process 1700 may represent an aspect of implementing various proposed designs, concepts, schemes, systems and methods described above. More specifically, process 1700 may represent an aspect of the proposed concepts and schemes pertaining to coordinated multi-access point transmission in wireless communications in accordance with the present disclosure. Process 1700 may include one or more operations, actions, or functions as illustrated by one or more of blocks 1710 and 1720. Although illustrated as discrete blocks, various blocks of process 1700 may be divided into additional blocks, combined into fewer blocks, or eliminated, depending on the desired implementation. Moreover, the blocks/sub-blocks of process 1700 may be executed in the order shown in FIG. 17 or, alternatively in a different order. Furthermore, one or more of the blocks/sub-blocks of process 1700 may be executed repeatedly or iteratively. Process 1700 may be implemented by apparatus 1520 as well as any variations thereof. Solely for illustrative purposes and without limiting the scope, process 1700 is described below in the context of apparatus 1520, which may be implemented in or as a second AP 120 in network environment 100, in accordance with one or more IEEE 802.11 standards. Process 1700 may begin at block 1710.

At 1710, process 1700 may involve processor 1522 performing, via transceiver 1526, a frame exchange applicable to a coordinated transmission with a first AP, wherein the coordinated transmission comprises at least one of a coordinated beamforming (CoBF) transmission and a coordinated spatial reuse (CoSR) transmission. Process 1700 may proceed from 1710 to 1720.

At 1720, process 1700 may involve processor 1522 transmitting, via the transceiver 1526, a physical layer protocol data unit (PPDU) based on the frame exchange, wherein the frame exchange comprises an invite frame received by the second AP from the first AP for inviting the second AP to participate in the CoBF transmission or the CoSR transmission, a response frame transmitted by the second AP to the first AP for indicating a participation in the CoBF transmission or the CoSR transmission in response to the invite frame, and a trigger frame received by the second AP from the first AP prior to a transmission of the PPDU, wherein the trigger frame comprises confirmed information for performing the CoBF transmission or the CoSR transmission.

In some implementations, the invite frame carries an indication indicating whether an initial control frame is to be transmitted by the first AP for making one or more non-AP STAs associated with the first AP ready to receive. In some implementations, the trigger frame comprises a user information field configured to carry a user information for the PPDU, and a first AID field in the user information field is not an AID field addressed to an associated non-AP STA in the coordinated transmission. In some implementations, the first AID field is at the start of the User Information field. In some implementations, the user information field is configured to carry information of one or more of non-AP STAs within one user information entry, and the information of the one or more of non-AP STAs comprises at least one of a modulation and coding scheme (MCS), a two-times low-density parity-check (2×LDPC) indication, and a basic service set (BSS) flag for each of the one or more non-AP STAs. In some implementations, all non-AP STAs that are scheduled to participate in the coordinated transmission listed in the invite frame and the response frame are presented in the trigger frame and a preamble of the PPDU in the coordinated transmission.

In some implementations, in an event that a non-AP STA that is scheduled by the second AP to participate in the coordinated transmission is unavailable, the non-AP STA is retained in the trigger frame and a preamble of the PPDU while a data portion of the PPDU corresponding to the non-AP STA is omitted. In some implementations, an order of users in the trigger frame is aligned with an order of users in a UHR-SIG User field for CoBF transmission.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B".

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method of coordinated multi-access point transmission, comprising:
performing, by a first access point, in the following also referred to as AP, a frame exchange applicable to a coordinated transmission with a second AP (1610), wherein the coordinated transmission comprises at least one of a coordinated beamforming, in the following also referred to as CoBF, transmission and a coordinated spatial reuse, in the following also referred to as CoSR, transmission; and
transmitting, by the first AP, a physical layer protocol data unit, in the following also referred to as PPDU, based on the frame exchange (1620),
wherein the frame exchange comprises an invite frame transmitted by the first AP for inviting the second AP to participate in the coordinated transmission, a response frame received by the first AP from the second AP for indicating a participation in the coordinated transmission in response to the invite frame, and a trigger frame transmitted by the first AP to the second AP prior to a transmission of the PPDU, wherein the trigger frame comprises confirmed information for performing the coordinated transmission.

2. A method of coordinated multi-access point transmission, comprising:
performing, by a second access point, in the following also referred to as AP, a frame exchange applicable to a coordinated transmission with a first AP (1710), wherein the coordinated transmission comprises at least one of a coordinated beamforming, in the following also referred to as CoBF, transmission and coordinated spatial reuse, in the following also referred to as CoSR, transmission; and
receiving, by the second AP, a physical layer protocol data unit, in the following also referred to as PPDU, based on the frame exchange (1720),
wherein the frame exchange comprises an invite frame received by the second AP from the first AP for inviting the second AP to participate in the coordinated transmission, a response frame transmitted by the second AP to the first AP for indicating a participation in the coordinated transmission in response to the invite frame, and a trigger frame received by the second AP from the first AP prior to a transmission of the PPDU, wherein the trigger frame comprises confirmed information for performing the coordinated transmission.

3. The method of Claim 1 or 2, wherein the invite frame carries an indication indicating whether an initial control frame is to be transmitted by the first AP for making one or more non-AP STAs associated with the first AP ready to receive.

4. The method of Claim 3, wherein the initial control frame is transmitted between the response frame and the trigger frame.

5. The method of any one of Claims 1 to 4, wherein the trigger frame comprises a user information field configured to carry user information for the PPDU, and a first AID field in the user information field is not an AID field addressed to an associated non-AP STA in the coordinated transmission.

6. The method of Claim 5, wherein the user information field is configured to carry information of one or more of non-AP STAs within one user information entry, and wherein the information of the one or more of non-AP STAs comprises at least one of a modulation and coding scheme, in the following also referred to as MCS, a two-times low-density parity-check, in the following also referred to as 2×LDPC, indication, and a basic service set, in the following also referred to as BSS, flag for each of the one or more non-AP STAs.

7. The method of any one of Claims 1 to 6, wherein all non-AP STAs that are scheduled to participate in the coordinated transmission listed in the invite frame and the response frame are presented in the trigger frame and a preamble of the PPDU in the coordinated transmission.

8. The method of Claim 7 being directly or indirectly dependent on Claim 1, wherein in an event that a non-AP STA that is scheduled by the first AP to participate in the coordinated transmission is unavailable, the non-AP STA is retained in the trigger frame and the preamble of the PPDU while a data portion of the PPDU corresponding to the non-AP STA is omitted; or
the method of Claim 7 being directly or indirectly dependent on Claim 2, wherein in an event that a non-AP STA that is scheduled by the second AP to participate in the coordinated transmission is unavailable, the non-AP STA is retained in the trigger frame and a preamble of the PPDU while a data portion of the PPDU corresponding to the non-AP STA is omitted.

9. The method of any one of Claims 1 to 8, wherein the invite frame is transmitted to solicit the second AP and one or more non-AP STAs associated with the first AP to transmit a trigger-based PPDU, wherein the response frame from the second AP and an ICR from the one or more non-AP STAs are carried in the trigger-based PPDU.

10. The method of any one of Claims 1 to 9, wherein a first response transmitted by the second AP in response to the invite frame carries an indicator indicating a location of the response frame carrying CoBF response information.

11. The method of Claim 10, wherein the indicator indicates whether the response frame carrying CoBF response information is carried in the first response or is carried in a subsequent intermediate coordination frame transmitted by the second AP.

12. The method of Claim 8 or any one of Claims 9 to 11 being directly or indirectly dependent on Claim 8, wherein the non-AP STA is determined to be unavailable in an event that the non-AP STA does not respond to the initial control frame from its associated AP, wherein the initial control frame is used for making the non-AP STA ready to receive.

13. The method of any one of Claims 1 to 12, further comprising: receiving a trigger-based acknowledgment transmitted by one or more STAs associated with the first AP.

14. The method of Claim 1 or any one of Claims 3 to 13 being directly or indirectly dependent on Claim 1, wherein an order of users in the trigger frame is aligned with an order of users in a UHR-SIG User field in the PPDU for the coordinated transmission; or
the method of Claim 2 or any one of Claims 3 to 13 being directly or indirectly dependent on Claim 2, wherein an order of users in the trigger frame is aligned with an order of users in a UHR-SIG User field for CoBF transmission.

15. An apparatus (1510) implementable in an access point, in the following also referred to as AP, comprising:
a transceiver (1516) configured to communicate wirelessly; and
a processor (1512) coupled to the transceiver (1516) and configured to perform operations comprising:
performing, via the transceiver (1516), a frame exchange applicable to a coordinated transmission with another AP, wherein the coordinated transmission comprises at least one of a coordinated beamforming, in the following also referred to as CoBF, transmission and a coordinated spatial reuse, in the following also referred to as CoSR, transmission; and
transmitting, via the transceiver (1516), a physical layer protocol data unit, in the following also referred to as PPDU, based on the frame exchange, wherein the frame exchange comprises an invite frame transmitted by the apparatus for inviting the other AP to participate in the coordinated transmission, a response frame received by the apparatus from the other AP for indicating a participation in the coordinated transmission in response to the invite frame, and a trigger frame transmitted by the apparatus to the other AP prior to a transmission of the PPDU, wherein the trigger frame comprises confirmed information for performing the coordinated transmission.
